# EUROPÄISCHE PATENTSCHRIFT

(11) **EP 3 781 996 B1**
(45) Veröffentlichungstag und Bekanntmachung des Hinweises auf die Patenterteilung: **29.07.2026**
(21) Anmeldenummer: 19715882.7
(22) Anmeldetag: 02.04.2019
(51) Int. Cl.: G05B 13/02, G06N 3/063, G06F 11/00

(54) **VERFAHREN, COMPUTERSYSTEM UND COMPUTERPROGRAMM ZUM STEUERN EINES AKTORS**
METHOD, COMPUTER SYSTEM AND COMPUTER PROGRAM FOR CONTROLLING AN ACTUATOR
PROCÉDÉ, SYSTÈME INFORMATIQUE ET PROGRAMME INFORMATIQUE DE COMMANDE D'UN ACTIONNEUR

(30) Priorität: 18.04.2018 DE 102018205869
(43) Veröffentlichungstag der Anmeldung: 24.02.2021
(73) Patentinhaber: Robert Bosch GmbH, 70442 Stuttgart (DE)
(72) Erfinder: SCHORN, Christoph, 71229 Leonberg (DE); TOPP, Jaroslaw, 71272 Renningen (DE); GEHRER, Stefan, Pittsburgh, Pennsylvania 15222 (US); GAUERHOF, Lydia, 71272 Renningen (DE)
(86) Internationale Anmeldenummer: PCT/EP2019/058258
(87) Internationale Veröffentlichungsnummer: WO 2019/201586

(56) Entgegenhaltungen:
- VIVIENNE SZE ET AL: "Efficient Processing of Deep Neural Networks: A Tutorial and Survey", ARXIV.ORG, CORNELL UNIVERSITY LIBRARY, 201 OLIN LIBRARY CORNELL UNIVERSITY ITHACA, NY 14853, 27 March 2017 (2017-03-27), XP080759895, DOI: 10.1109/JPROC.2017.2761740
- SEBASTIAN VOGEL ET AL: "Efficient Stochastic Inference of Bitwise Deep Neural Networks", ARXIV.ORG, CORNELL UNIVERSITY LIBRARY, 201 OLIN LIBRARY CORNELL UNIVERSITY ITHACA, NY 14853, 20 November 2016 (2016-11-20), XP080733355
- REAGEN BRANDON ET AL: "Minerva: Enabling Low-Power, Highly-Accurate Deep Neural Network Accelerators", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18 June 2016 (2016-06-18), pages 267 - 278, XP032950665, ISSN: 1063-6897, ISBN: 978-0-7695-3174-8, [retrieved on 20160824], DOI: 10.1109/ISCA.2016.32

## Beschreibung

### Technisches Gebiet

Die Erfindung betrifft ein Verfahren zum Steuern eines Aktors abhängig von einer Ausgangsgröße eines maschinellen Lernsystems. Ebenso betrifft die Erfindung ein Computersystem zum Steuern des Aktors und ein Computerprogramm, das eingerichtet ist, das Verfahren auszuführen.

### Stand der Technik

DE 10 2011 087 791 A1 offenbart ein Verfahren in einem Manöverassistenzsystem in Fahrzeugen sowie entsprechende Manöverassistenzsysteme. Das Verfahren umfasst die Schritte: Erkennen einer Situation, gemäß der ein Fahrer des Fahrzeuges in Bezug auf ein Objekt eine manuelle Handlung vornehmen will, sowie Unterstützen bei der Ausrichtung des Fahrzeuges in Bezug auf das Objekt.

SZE ET AL: "Efficient Processing of Deep Neural Networks: A Tutorial and Survey", 27. März 2017, offenbart ein Verfahren zur Reduktion der Quantisierungsstufen von Parametern eines DNN.

### Vorteile der Erfindung

Während des Betriebes eines neuronalen Netzes können Signalstörungen innerhalb des neuronalen Netzes auftreten, die zu einer Falschklassifikation führen können. Dies kann bei sicherheitskritischen Anwendungen schwerwiegende Folgen haben, beispielsweise wenn die Anwesenheit eines Objekts in der Verkehrsszene mittels des durch eine Signalstörung beeinträchtigten neuronalen Netzes nicht realitätsgemäß detektiert werden kann. Der Gegenstand der unabhängigen Ansprüche hat demgegenüber den Vorteil, dass Parameter eines tiefen neuronalen Netzes mittels Masken aus einem Speicher ausgelesen werden, wodurch Störungen, insbesondere Bit-Kipper, innerhalb des Speichers eine geringere Auswirkung auf den Betrieb des tiefen neuronalen Netzes haben können.

### Offenbarung der Erfindung

In einem ersten Aspekt wird ein Verfahren zum Steuern eines Aktors gemäß des unabhängigen Anspruchs 1 vorgestellt.

Ein angelerntes maschinelles Lernsystem ist ein maschinelles Lernsystem, welches unter Verwendung vorgebbarer Trainingsdaten angelernt wurde, eine vorgebbare Aufgabe zu lösen, beispielsweise ein Bild zu segmentieren oder eine Eingangsgröße zu klassifizieren.

Ein Vorteil dieses Aspektes ist, dass durch eine Reduzierung der Anzahl der möglichen unterschiedlichen Größen, z.B. ein Wert oder ein zumindest eindimensionaler Vektor, eine Reduktion des Speicheraufwands zum Speichern der Parameter erzielt werden kann. Ferner kann einhergehend mit der Reduktion der Anzahl unterschiedlicher Größen auch die Anzahl der benötigten Bits zur Darstellung der unterschiedlichen Größen reduziert werden. Daher werden nicht mehr alle Bits eines Registers benötigt, um die jeweilige Größe in dem Register zu hinterlegen. Nur die benötigten Bits zur Darstellung der hinterlegten Größe im Speicherblock werden mittels der Maske ausgelesen, wodurch z.B. Bit-Kipper, die bei den nicht benötigten Bits zur Darstellung der hinterlegten Größe aufgetreten sein könnten, durch das maskierte Auslesen des Registers nicht den ursprünglich hinterlegten Parameter verändern. Dies hat den vorteilhaften Effekt, dass eine Erhöhung der Robustheit des maschinellen Lernsystems gegenüber hardwareseitigen Störungen erreicht werden kann, die beispielhaft durch hochenergetische Strahlung entstehen können.

Ein weiterer Vorteil ist, dass durch das Speichern eines Parameters jeweils in einem Speicherblock im Falle eines Kontrollflussfehlers nur ein Parameter falsch ausgelesen wird. Unter einem Kontrollflussfehler wird im Folgenden verstanden, dass ein falsches Register ausgelesen wird. Ferner können durch die reduzierte Anzahl an unterschiedlichen Größen weniger unterschiedliche Fehler auftreten, wodurch die mögliche Anzahl unterschiedlicher Fehler eingeschränkt werden kann.

Vorteilhaft ist, wenn eine maximale Größe der ersten Menge unterschiedlicher möglicher Größen größer als eine maximale Größe der zweiten Menge unterschiedlicher möglicher Größen ist. Der Vorteil hierbei ist, dass durch kleinere maximale Größen im Falle einer Bit-Kipper Störung einer der Bits die benötigt werden, die maximale Größe darzustellen, der absolute maximale Fehler kleiner wird und dass eine kleinere maximale Größe mit weniger Bit im Speicher hinterlegt werden kann.

Weiterhin vorteilhaft ist, wenn während des Ermittelns der Ausgangsgröße des maschinellen Lernsystems ermittelte Größen, insbesondere Zwischengrößen, daraufhin geprüft werden, ob diese größer als eine Maximalgröße sind. Wenn beim Ermitteln der Ausgangsgröße des maschinellen Lernsystems eine Größe des maschinellen Lernsystems größer als eine Maximalgröße ist, wird die Ausgangsgröße des maschinellen Lernsystems als fehlerhaft gekennzeichnet. Dadurch können Störungen oder Fehler frühzeitig detektiert werden.

Das Verfahren des ersten Aspektes wird in einem physikalischen/technischen System, nämlich einem teilautonomen Roboter eingesetzt, welcher einen Aktor aufweist. Die ermittelte Ausgangsgröße wird einer Steuereinheit verwendet, sodass die Steuereinheit abhängig von dieser Ausgangsgröße den Aktor steuert. Die Steuereinheit kann hierfür eine Steuergröße abhängig von der ermittelten Ausgangsgröße bestimmen und diese zum Steuern des Aktors verwenden.

In einem weiteren Aspekt wird ein Computersystem gemäß Anspruch 6 vorgestellt. Das Computersystem umfasst wenigstens einen Prozessor, der mit einem Speichermodul verbunden ist. Auf dem Speichermodul ist ein Computerprogramm hinterlegt und zumindest Parameter eines maschinellen Lernsystems sind in Speicherblöcken des Speichermoduls, insbesondere Registern, hinterlegt. Unter anderem ist das Computersystem eingerichtet, die Parameter jeweils mittels zumindest einer Maske aus dem jeweiligen Speicherblock auszulesen.

Der Vorteil ist, dass mittels der Maske ausschließlich die Bits zur Darstellung des Parameters aus dem Speicher ausgelesen werden, wodurch Bits, die nicht zur Darstellung des Parameters benötigt werden, durch die Maskierung nicht ausgelesen werden und damit auch keine Störungen dieser Bits auftreten.

Vorteilhaft ist, wenn eine vorgebbare Anzahl der Speicherblöcke jeweils in eine Mehrzahl von Abschnitten aufgeteilt sind und in einem jeden Abschnitt jeweils einer der Parameter hinterlegt ist. Die Maske berücksichtigt nur diejenigen Bits des jeweiligen Abschnitts, die benötigt werden, um eine maximale Größe der zweiten vorgebbaren Menge darzustellen oder die Maske berücksichtigt nur diejenigen Bits des jeweiligen Speicherblocks, die in jedem Abschnitt benötigt werden, um die maximale Größe darzustellen. Dies hat den Vorteil, dass unter Beibehalten des Vorteils der Maskierung der Speicher effizient genutzt wird.

Weiterhin vorteilhaft ist, wenn das maschinelle Lernsystem ein tiefes neuronales Netz umfasst. Die Größen derjenigen Parameter, die einer Schicht, insbesondere Neuron, des tiefen neuronalen Netz zugeordnet sind, wurden jeweils auf eine der Größen der jeweiligen zugeordneten Menge unterschiedlicher möglicher Größen dieser Schicht, insbesondere Neuron, abgebildet. Das Computersystem ist des Weiteren eingerichtet, jeweils unterschiedliche Masken zum Auslesen der Parameter der jeweiligen Schichten, insbesondere Neuronen, zu verwenden.

Der Vorteil hierbei ist, dass die Maske flexibel für die jeweils unterschiedlichen Schichten, bzw. Neuronen angepasst werden kann. Damit kann eine höhere Genauigkeit und/oder ein größerer Wertebereich durch eine entsprechende Maske für die jeweilige Schicht bzw. Neuron bereitgestellt werden.

In einem weiteren Aspekt wird ein Computerprogramm, welches eingerichtet ist, eines der vorherigen genannten Verfahren auszuführen vorgeschlagen. Das Computerprogramm umfasst Anweisungen, die einen Computer oder das Computersystem des weiteren Aspektes veranlassen, eines dieser genannten Verfahren mit all seinen Schritten auszuführen, wenn das Computerprogramm auf dem Computer/-system abläuft. Ferner wird ein maschinenlesbares Speichermodul vorgeschlagen, auf welchem das Computerprogramm gespeichert ist.

Ausführungsbeispiele der oben genannten Aspekte sind in den beiliegenden Zeichnungen dargestellt und in der nachfolgenden Beschreibung näher erläutert. Dabei zeigen:

### Kurze Beschreibung der Zeichnungen

- Fig. 1: eine schematische Darstellung eines zumindest teilautonomen Fahrzeuges;
- Fig. 2: eine schematische Darstellung eines hardwarenahen Zahlendarstellungsformates ohne und mit einer Bit-Kipper Störung und einer Abbildung von Werten eines ersten Wertebereichs auf einen zweiten Wertebereich;
- Fig. 3: eine schematische Darstellung einer Ausführungsform eines Computersystems;
- Fig. 4: eine schematische Darstellung einer Ausführungsform des Verfahrens zum Steuern eines Aktors.

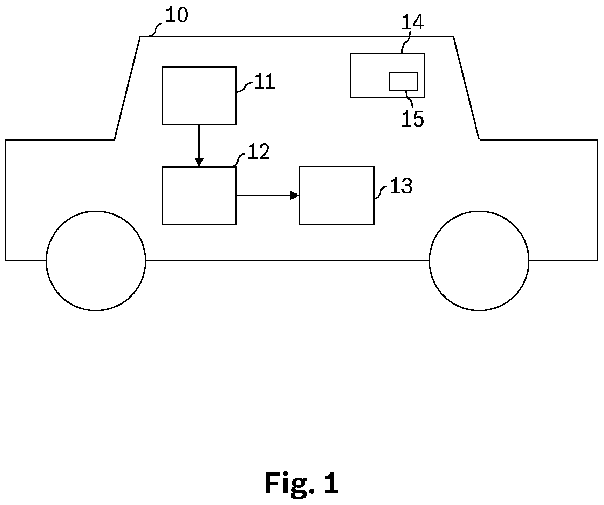

Figur 1 zeigt eine schematische Darstellung eines zumindest teilautonomen Roboters, der im Ausführungsbeispiel gegeben ist durch ein zumindest teilautonomes Fahrzeug (10). In einem weiteren Ausführungsbeispiel kann der zumindest teilautonome Roboter ein Service-, Montage- oder stationärer Produktionsroboter sein. Das zumindest teilautonome Fahrzeug (10) kann eine Erfassungseinheit (11) umfassen. Die Erfassungseinheit (11) kann zum Beispiel eine Kamera sein, welche eine Umgebung des Fahrzeugs (10) erfasst. Die Erfassungseinheit (11) kann mit einem maschinellen Lernsystem (12) verbunden sein. Das maschinelle Lernsystem (12) ermittelt abhängig von einer bereitgestellten Eingangsgröße, z.B. mittels der Erfassungseinheit (11), und in Abhängigkeit einer Mehrzahl von das maschinelle Lernsystem charakterisierenden Größen eine Ausgangsgröße. Die Ausgangsgröße kann an eine Aktorsteuerungseinheit (13) weitergeleitet werden. Die Aktorsteuerungseinheit (13) kann in Abhängigkeit der Ausgangsgröße des maschinellen Lernsystems (12) einen Aktor ansteuern. Der Aktor kann in diesem Ausführungsbeispiel ein Motor des Fahrzeugs (10) sein.

In einem weiteren Ausführungsbeispiel umfasst die Aktorsteuerungseinheit (13) ein Freigabesystem. Das Freigabesystem entscheidet, ob ein Objekt, z.B. ein erfasster Roboter oder eine erfasste Person, Zugang zu einem Bereich hat, abhängig von der Ausgangsgröße des maschinellen Lernsystems (12). Vorzugsweise kann der Aktor abhängig von einer Entscheidung des Freigabesystems angesteuert werden.

Ferner umfasst das Fahrzeug (10) eine Recheneinheit (14) und ein maschinenlesbares Speicherelement (15). Auf dem Speicherelement (15) kann ein Computerprogramm gespeichert sein, welches Befehle umfasst, die beim Ausführen der Befehle auf der Recheneinheit (14) dazu führen, dass die Recheneinheit (14) das erfindungsgemäße Verfahren ausführt. Denkbar ist auch, dass ein Downloadprodukt oder ein künstlich generiertes Signal, die jeweils das Computerprogramm umfassen können, nach Empfangen an einem Empfänger des Fahrzeugs (10) die Recheneinheit (14) veranlassen, das erfindungsgemäße Verfahren auszuführen.

In einer weiteren Ausführungsform wird das maschinelle Lernsystem (12) in einem Messsystem verwendet, welches nicht in den Figuren dargestellt ist. Das Messsystem unterscheidet sich zu dem Roboter nach Figur 1 dahingehend, dass das Messsystem keine Aktorsteuerungseinheit (13) umfasst. Das Messsystem kann die Ausgangsgröße des maschinellen Lernsystems (12) statt sie an die Aktorsteuerungseinheit (13) zu weiterzuleiten, abspeichern oder darstellen, beispielsweise mittels visueller oder auditiver Darstellungen.

Es ist auch denkbar, dass in einer Weiterentwicklung des Messsystems die Erfassungseinheit (11) ein Bild eines menschlichen oder tierischen Körpers oder eines Teils davon erfasst. Beispielsweise kann dies mittels eines optischen Signals, mittels eines Ultraschallsignals, oder mittels eines MRT/CT-Verfahrens erfolgen. Das Messsystem kann in dieser Weiterentwicklung ein maschinelle Lernsystem umfassen, das derart angelernt ist, abhängig von der Eingangsgröße eine Klassifikation auszugeben, z.B. welches Krankheitsbild auf Basis diese Eingangsgröße möglicherweise vorliegt.

Das maschinelle Lernsystem (12) kann ein tiefes neuronales Netz umfassen.

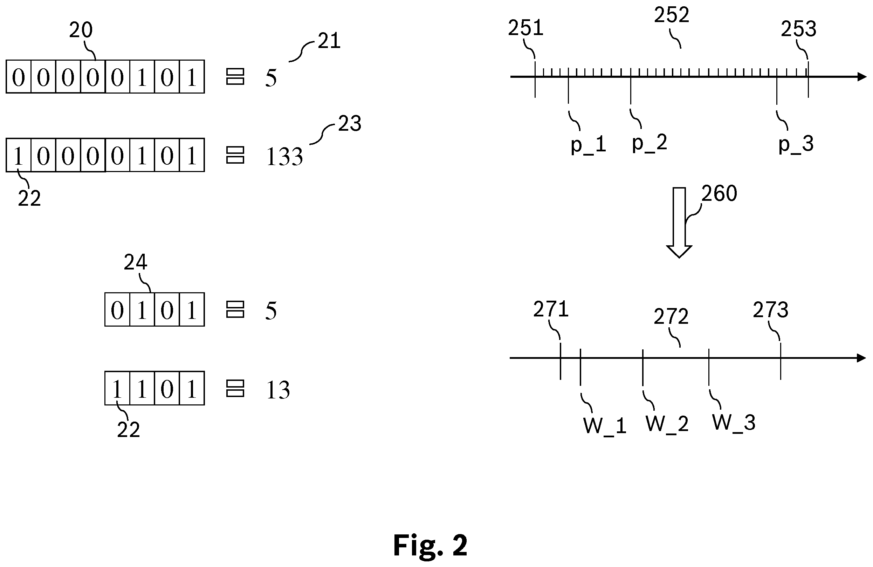

Figur 2 zeigt eine schematische Darstellung eines hardwarenahen Zahlendarstellungsformats (20,24). Ein erstes hardwarenahes Zahlendarstellungsformat (20), ein Binärsystem mit 8 Bit, stellt einen Wert 5 (21) mittels acht unterschiedlichen Stellenwerten dar. Eine Störung, beispielsweise ein Bit-Kipper, kann in einem Register, in welchem der Wert 5 (21) mit dem ersten hardwarenahen Zahlendarstellungsformat (20) hinterlegt ist, dazu führen, dass einer der Stellenwerte (22) verändert wird. Diese Bit-Kipper-Störung ist beispielhaft in Figur 2 dargestellt, in dem im ersten hardwarenahen Zahlendarstellungsformat (20) der höchstwertige Stellenwert (22) invertiert wird. Diese Störung kann dazu führen, dass anstatt dem Wert 5 (21) nun der Wert 133 (23) in dem Register hinterlegt ist.

In einem zweiten hardwarenahen Zahlendarstellungsformat (24), beispielhaft ein Binärsystem mit 4 Bit, führt eine Störung des höchstwertigen Stellenwertes (22) dazu, dass anstatt dem Wert 5 nun der Wert 13 hinterlegt ist.

Anhand dieses Beispiels wird ersichtlich, dass eine Einschränkung des maximalen erlaubten Wertebereichs des hardwarenahen Zahlendarstellungsformats und die damit verbundene Reduktion der benötigten Bits, die zur Darstellung des eingeschränkten Wertebereichs benötigt werden, zu einer Reduktion des maximalen Fehlers einer Bit-Kipper-Störung führen kann. Daher ist es vorteilhaft, wenn Parameter des maschinellen Lernsystems mit wenig Bits dargestellt werden, wodurch Bit-Kipper zu einer geringeren Veränderung des Wertes, der mit diesen Bits dargestellt wird, führen.

In Figur 2 sind des Weiteren unterschiedliche Wertebereiche (252,272) von Parametern des maschinellen Lernsystems schematisch dargestellt. Die Parameter des angelernten tiefen neuronalen Netzes weisen jeweils Werte aus einem ersten Wertebereich (252) auf. Der erste Wertebereich (252) umfasst eine erste Menge unterschiedlicher möglicher Werte (p_1,p_2,p_3), die einen minimalen Wert (251) und einen maximalen Wert (253) umfassen kann.

Die Werte der Parameter werden mittels einer vorgebbaren Abbildung (260) derart auf einen zweiten Wertebereich (272) abgebildet, dass die Werte mit weniger Bits dargestellt werden können. Der zweite Wertebereich (272) umfasst eine vorgebbare Menge unterschiedlicher möglicher Werte (w_1,w_2,w_3) und kann sich zwischen zwei vorgebbaren Werten (271,273) erstrecken.

Bevorzugt ist ein maximaler Wert (p_3) der Menge unterschiedlicher möglicher Werte (p_1,p_2,p_3) des ersten Wertebereichs (252) größer als ein maximaler Wert (w_3) der Menge unterschiedlicher möglicher Werte Menge unterschiedlicher möglicher Werte (w_1,w_2,w_3) des zweiten Wertebereichs (272).

In einer weiteren Ausführungsform ist eine Differenz zwischen zwei, insbesondere unmittelbar, aufeinanderfolgenden Werten (w_2,w_3) des zweiten Wertebereichs (272) kleiner als eine Differenz zwischen zwei, insbesondere unmittelbar, aufeinanderfolgenden Werten (p_2,p_3) des ersten Wertebereichs (252), die auf diese zwei aufeinanderfolgende Werte (w_2,w_3) abgebildet werden. Durch die kleine Differenz zwischen zwei unterschiedlichen Werten kann beim Auftreten des Bit-Kippers der Unterschied zu dem ursprünglichen Wert klein sein, sodass der daraus resultierende Fehler einen kleinen Einfluss auf das maschinelle Lernsystem hat.

In einem alternativen Ausführungsbeispiel kann das maschinelle Lernsystem (12) ein faltendes neuronales Netz (engl. Convolutional Neural Network) umfassen. Die Parameter können dann auch Filter-Kernels sein. Koeffizienten der Filter-Kernels können in diesem Ausführungsbeispiel von einem ersten Wertebereich (252) auf einen zweiten Wertebereich (272) abgebildet werden. Alternativ oder zusätzlich können auch ganze Filter-Kernels auf vorgebbare Filter-Kernels abgebildet werden, die beispielsweise mit einer reduzierten Anzahl von Bits darstellbar sind.

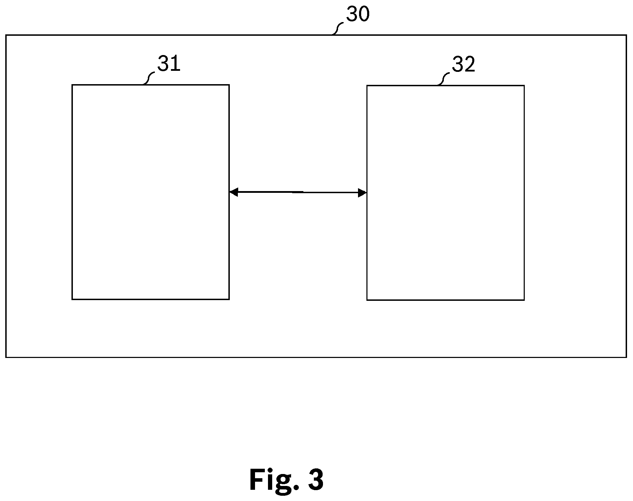

Figur 3 zeigt eine schematische Darstellung eines Computersystems (30), das eingerichtet ist, das maschinelle Lernsystem zu betreiben und einen Aktor abhängig von einer Ausgangsgröße des maschinellen Lernsystems (12) zu steuern. Das Computersystem (30) umfasst wenigstens eine Recheneinheit (31), welche mit einem Speicher (32) verbunden ist. In dem Speicher (32) sind eine Software und Parameter eines maschinellen Lernsystems hinterlegt. Zusätzlich können auch weitere Informationen über das maschinelle Lernsystem, beispielsweise dessen Architektur, in dem Speicher (32) hinterlegt sein.

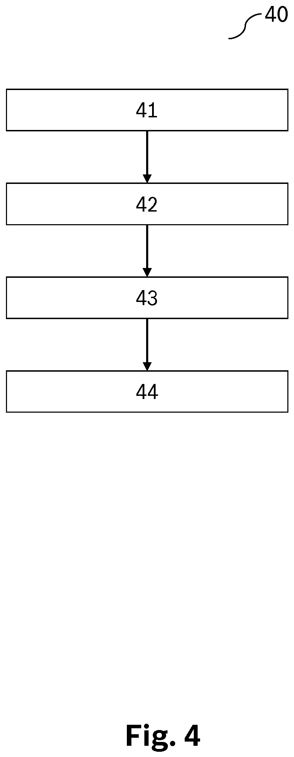

Figur 4 zeigt eine schematische Darstellung eines Verfahrens (40) zum Steuern des Aktors.

Das Verfahren (40) beginnt mit Schritt 41. In Schritt 41 wird ein angelerntes maschinellen Lernsystem (12) bereitgestellt. Die Parameter des angelernten maschinellen Lernsystems weisen Werte aus dem ersten Wertebereich (252) auf. Diese Werte werden anschließend in Schritt 42 auf einen zweiten Wertebereich (272) abgebildet. Das Abbilden der Werte der Parameter kann derart durchgeführt werden, dass die Werte jeweils auf einen Wert einer vorgebbaren Menge unterschiedlicher möglicher Werte (w_1,w_2,w_3) abgebildet werden. Beispielsweise kann ein Wert des Parameters des angelernten maschinellen Lernsystems, der einem der unterschiedlicher möglicher Werte (w_1,w_2,w_3) der vorgebbaren Menge nach einem mathematischen Distanzmaß am nächsten liegt, auf diesen abgebildet werden.

Die vorgebbare Menge unterschiedlicher möglicher Werte (w_1,w_2,w_3) kann mittels einer Clusteranalyse (z.B. k-Means-Algorithmus) der Werte der Parameter des bereitgestellten maschinellen Lernsystems (12) ermittelt werden.

Alternativ kann auch eine Mehrzahl von vorgebbaren Mengen unterschiedlicher möglicher Werte (w_1,w_2,w_3) bereitgestellt werden, z.B. mit jeweils unterschiedlichen Quantisierungsstufen. Mittels einer Kullback-Leibler (KL)-Divergenz, die jeweils zwischen einer der vorgebbaren Mengen und der Verteilung der Werte der Parameter des bereitgestellten maschinellen Lernsystems ermittelt wird, kann aus der Mehrzahl vorgebbarer Mengen unterschiedlicher möglicher Werte (w_1,w_2,w_3), die Menge mit der geringsten ermittelten KL-Divergenz ausgewählt werden. Die KL-Divergenz charakterisiert einen Informationsverlust, der beim Abbilden der Werte auf einen kleineren Wertebereich auftritt. Diejenige Menge, die die geringste KL-Distanz aufweist, kann anschließend verwendet werden, um die Werte der Parameter des bereitgestellten maschinellen Lernsystem auf Werte dieser Menge abzubilden.

In einem weiteren Ausführungsbeispiel, kann der maximale Wert (w_3) der unterschiedlichen möglichen Werte (w_1,w_2,w_3) vorgebbar sein, bevorzugt kleiner als der maximale mögliche Wert der Parameter des bereitgestellten maschinellen Lernsystems, um den Wertebereich der vorgebbaren Menge unterschiedlichen möglichen Werte (w_1,w_2,w_3) weiter einzuschränken. Der maximale Wert (w_3) kann ebenfalls in der Ermittlung der KL-Divergenz berücksichtigt werden, um einen geeigneten maximalen Wert (w_3) zu bestimmen, der zu einem geringen Informationsverlust führt.

Nachdem die Parameter des angelernten maschinellen Lernsystems auf den zweiten Wertebereich (272) abgebildet wurden folgt Schritt 43. In Schritt 43 werden die abgebildeten Parameter jeweils in einem Speicherelement des Speichers (32) hinterlegt.

In dem nachfolgenden Schritt 44 wird dem maschinellen Lernsystem eine Eingangsgröße bereitgestellt und abhängig von der Eingangsgröße wird eine Ausgangsgröße des maschinellen Lernsystems ermittelt. Die Eingangsgröße kann beispielsweise eine Videoaufnahme oder ein Kamerabild der Umgebung des Aktors sein. Das maschinelle Lernsystem ermittelt abhängig von der bereitgestellten Eingangsgröße und den hinterlegten Parametern eine Ausgangsgröße. Dabei werden die hinterlegten Parameter aus dem Speicher mittels einer Maske ausgelesen. Die Maske liest dabei nur diejenigen Bits des Speicherelements aus, die benötigt werden um den maximalen Wert (w_3) der unterschiedlichen möglichen Werte (w_1,w_2,w_3) darzustellen.

Die Maske kann in Software implementiert sein, beispielsweise durch eine Bitfolge, die aus Nullen und Einsen besteht. Die Bitfolge wird mit den Bits des Speicherelements logisch AND verknüpft. Alternativ kann die Maske in Hardware implementiert sein.

Wenn beispielsweise das Register 8 Bit umfasst und der maximale Wert (w_3) der unterschiedlichen möglichen Werte (w_1,w_2,w_3) durch die hinteren 4 Bit dargestellt werden kann, können die nicht benötigten vorderen 4 Bit durch die Maske logisch AND mit einer 0 verknüpft werden, wodurch Bit-Kipper-Störungen dieser Bits nicht zu einem falschen ausgelesenen Parameter aus der dem Register führen. Damit könnte in Figur 2 dennoch die ursprünglich hinterlegte Zahl 5 ausgelesen werden, auch wenn in dem 8 Bit Register die Zahl 133 fälschlicherweise hinterlegt ist.

Nachdem die Ausgangsgröße des maschinellen Lernsystems ermittelt wurde, kann ein Aktor, zum Beispiel der Motor eines zumindest teilautonomen Fahrzeuges, mittels der Aktorsteuerungseinheit (13) angesteuert werden. Detektiert beispielsweise das maschinelle Lernsystem (12) eine Person, kann die Aktorsteuerungseinheit (13) den Aktor ansteuern, sodass dieser das Fahrzeug (10) abbremst.

Damit endet das Verfahren (40). Alternativ oder zusätzlich ist es denkbar, dass das Verfahren zyklisch mit Schritt 44 erneut durchgeführt wird, wenn zum Beispiel ein neues Kamerabild erfasst wurde oder ein Trigger diesbezüglich ausgelöst wurde.

Es versteht sich, dass das Verfahren nicht nur wie beschrieben vollständig in Software, sondern auch in Hardware oder in einer Mischform aus Software und Hardware implementiert sein kann.

## Patentansprüche

1. Verfahren (40) zum Steuern eines Aktors (10) eines teilautonomen Roboters, umfassend die Schritte:
- Abbilden von Parametern eines angelernten maschinellen Lernsystems (12), die jeweils eine Größe aus einer ersten Menge unterschiedlicher möglicher Größen (p_1,p_2,p_3) aufweisen, jeweils auf eine Größe zumindest einer vorgebbaren zweiten Menge unterschiedlicher möglicher Größen (w_1,w_2,w_3), wobei die zweite Menge unterschiedlicher möglicher Größen (w_1,w_2,w_3) weniger Größen als die erste Menge unterschiedlicher möglicher Größen (p_1,p_2,p_3) aufweist;
- Hinterlegen der abgebildeten Parameter jeweils in einem Speicherblock, wobei ein Speicherblock ein Register ist;
- Ermitteln einer Ausgangsgröße des maschinellen Lernsystems abhängig von einer Eingangsgröße und den hinterlegten Parametern, wobei die hinterlegten Parameter jeweils mittels zumindest einer Maske aus dem jeweiligen Speicherblock ausgelesen werden, wobei die Maske aus einer vorgebbaren Bitfolge besteht, diese Bitfolge die gleiche Anzahl von Bits wie der Speicherblock aufweist und beim Auslesen ein jedes Bit des Speicherblocks mit wenigstens einem jeweiligen zugeordneten Bit der Maske logisch AND verknüpft wird, und wobei mittels der Maske nur diejenigen Bits des jeweiligen Speicherblocks berücksichtigt werden, die benötigt werden, um eine maximale Größe (w_3) der zweiten Menge unterschiedlicher möglicher Größen (w_1,w_2,w_3) darzustellen; und
- Ansteuern des Aktors (10) abhängig von der ermittelten Ausgangsgröße.

2. Verfahren nach Anspruch 1, wobei eine maximale Größe (p_3) der ersten Menge unterschiedlicher möglicher Größen (p_1,p_2,p_3) größer als die maximale Größe (w_3) der zweiten Menge unterschiedlicher möglicher Größen (w_1,w_2,w_3) ist.

3. Verfahren nach einem der vorherigen Ansprüche, wobei das maschinelle Lernsystem ein tiefes neuronales Netz umfasst,
wobei die Größen derjenigen Parameter, die einer Schicht, insbesondere Neuron, des tiefen neuronalen Netz zugeordnet sind, jeweils auf eine der Größen der jeweiligen zugeordneten Menge unterschiedlicher möglicher Größen (w_1,w_2,w_3) dieser Schicht, insbesondere Neuron, abgebildet werden,
wobei zum Auslesen der Parameter jeweils unterschiedliche Masken für die jeweiligen Schichten, insbesondere Neuronen, verwendet werden.

4. Verfahren nach einem der vorherigen Ansprüche, wobei eine vorgebbare Anzahl der Speicherblöcke jeweils in eine Mehrzahl von Abschnitten aufgeteilt sind und in einem jeden Abschnitt jeweils einer der Parameter hinterlegt ist,
wobei die Maske nur diejenigen Bits des jeweiligen Abschnitts berücksichtigt, die benötigt werden, um die zweite maximale Größe (w_3) darzustellen oder die Maske nur diejenigen Bits des jeweiligen Speicherblocks berücksichtigt, die in jedem Abschnitt benötigt werden, um die zweite maximale Größe (w_3) darzustellen.

5. Verfahren nach einem der vorherigen Ansprüche, wobei dann, wenn beim Ermitteln der Ausgangsgröße des maschinellen Lernsystems (12) eine Größe des maschinellen Lernsystems (12) größer als eine Maximalgröße ist, wird die Ausgangsgröße des maschinellen Lernsystems (12) als fehlerhaft gekennzeichnet.

6. Computersystem (30), eingerichtet zum Steuern eines Aktors eines teilautonomen Roboters, umfassend wenigstens einen Prozessor (31), der mit einem Speichermodul (32) verbunden ist, wobei auf dem Speichermodul (32) ein Computerprogramm hinterlegt ist und zumindest Parameter eines maschinellen Lernsystems (12) in Speicherblöcken des Speichermoduls (32), wobei die Speicherblöcke Register sind, hinterlegt sind,
wobei das maschinelle Lernsystem (12) auf einem weiteren Computersystem angelernt wurde und nach dem Anlernen jeweils eine Größe der Parameter aus einer ersten Menge unterschiedlicher möglicher Größen (p_1,p_2,p_3) jeweils auf eine Größe zumindest einer vorgebbaren zweiten Menge unterschiedlicher möglicher Größen (w_1,w_2,w_3) abgebildet wurde,
wobei die zweite Menge unterschiedlicher möglicher Größen (w_1,w_2,w_3) weniger Größen als die erste Menge unterschiedlicher möglicher Größen (p_1,p_2,p_3) aufweist, und
wobei das Computersystem (30) eingerichtet ist, die Parameter jeweils mittels zumindest einer Maske aus dem jeweiligen Speicherblock auszulesen, wobei die Maske aus einer vorgebbaren Bitfolge besteht, diese Bitfolge die gleiche Anzahl von Bits wie der Speicherblock aufweist und das Computersystem eingerichtet ist, beim Auslesen ein jedes Bit des Speicherblocks mit wenigstens einem jeweiligen zugeordneten Bit der Maske logisch AND zu verknüpfen, und wobei mittels der Maske nur diejenigen Bits des jeweiligen Speicherblocks zu berücksichtigen, die benötigt werden, um eine maximale Größe (w_3) der zweiten Menge unterschiedlicher möglicher Größen (w_1,w_2,w_3) darzustellen,
wobei das Computersystem eingerichtet ist, abhängig von einer Eingangsgröße und den hinterlegten Parametern eine Ausgangsgröße des maschinellen Lernsystems zu ermitteln und den Aktor abhängig von der ermittelten Ausgangsgröße anzusteuern.

7. Computersystem nach Anspruch 6, wobei das maschinelle Lernsystem (12) ein tiefes neuronales Netz umfasst,
wobei die Größen derjenigen Parameter, die einer Schicht, insbesondere Neuron, des tiefen neuronalen Netz zugeordnet sind, jeweils auf eine der Größen der jeweiligen zugeordneten Menge unterschiedlicher möglicher Größen (w_1,w_2,w_3) dieser Schicht, insbesondere Neuron, abgebildet wurden,
wobei das Computersystem des Weiteren eingerichtet ist, zum Auslesen der Parameter jeweils unterschiedliche Masken für die jeweiligen Schichten, insbesondere Neuronen, zu verwenden.

8. Computersystem nach Anspruch 6 oder 7, wobei eine maximale Größe (p_3) der ersten Menge unterschiedlicher möglicher Größen (p_1,p_2,p_3) größer als die maximale Größe (w_3) der zweiten Menge unterschiedlicher möglicher Größen (w_1,w_2,w_3) ist,
wobei eine vorgebbare Anzahl der Speicherblöcke jeweils in eine Mehrzahl von Abschnitten aufgeteilt sind und in einem jeden Abschnitt jeweils einer der Parameter hinterlegt ist,
wobei die Maske nur diejenigen Bit des jeweiligen Abschnitts berücksichtigt, die benötigt werden, um die zweite maximale Größe (w_3) darzustellen oder die Maske nur diejenigen Bits des jeweiligen Speicherblocks berücksichtigt, die in jedem Abschnitt benötigt werden, um die zweite maximale Größe (w_3) darzustellen.

9. Computerprogramm, welches Befehle umfasst, die beim Ausführen auf einem Computer diesen veranlassen, das Verfahren nach einem der Ansprüche 1 bis 5 auszuführen.

10. Maschinenlesbares Speicherelement (15), auf welchem das Computerprogramm nach Anspruch 9 gespeichert ist.

## Claims

1. Method (40) for controlling an actuator (10) of a semi-autonomous robot, comprising the steps of:
- mapping parameters of a trained machine learning system (12), each of which comprises a variable from a first set of different possible variables (p_1,p_2,p_3), to respective variables in at least one predefinable second set of different possible variables (w_1,w_2,w_3),
the second set of different possible variables (w_1,w_2,w_3) comprising fewer variables than the first set of different possible variables (p_1,p_2,p_3);
- storing each of the mapped parameters in a memory block, a memory block being a register;
- determining an output variable of the machine learning system on the basis of an input variable and the stored parameters,
each of the stored parameters being read from the respective memory block by means of at least one mask, the mask consisting of a predefinable bit sequence, this bit sequence comprising the same number of bits as the memory block, and, during reading, each bit of the memory block being ANDed with at least one respective associated bit of the mask, and the mask being used to take account of only those bits of the respective memory block that are needed to represent a maximum variable (w_3) in the second set of different possible variables (w_1,w_2,w_3); and
- controlling the actuator (10) on the basis of the determined output variable.

2. Method according to Claim 1, a maximum variable (p_3) in the first set of different possible variables (p_1,p_2,p_3) being greater than the maximum variable (w_3) in the second set of different possible variables (w_1,w_2,w_3).

3. Method according to either of the preceding claims, the machine learning system comprising a deep neural network,
each of the variables of those parameters that are associated with a layer, in particular neuron, of the deep neural network being mapped to one of the variables in the respective associated set of different possible variables (w_1,w_2,w_3) of this layer, in particular neuron,
each of the parameters being read using different masks for the respective layers, in particular neurons.

4. Method according to one of the preceding claims, each of a predefinable number of memory blocks being divided into a plurality of sections and each section storing one of the parameters,
the mask taking account of only those bits of the respective section that are needed to represent the second maximum variable (w_3), or the mask taking account of only those bits of the respective memory block that are needed in each section to represent the second maximum variable (w_3).

5. Method according to one of the preceding claims, wherein if, during determination of the output variable of the machine learning system (12), a variable of the machine learning system (12) is greater than a maximum variable, the output variable of the machine learning system (12) is marked as erroneous.

6. Computer system (30) configured for controlling an actuator of a semi-autonomous robot, comprising at least one processor (31) connected to a memory module (32), the memory module (32) storing a computer program, and at least parameters of a machine learning system (12) being stored in memory blocks of the memory module (32), the memory blocks being registers,
the machine learning system (12) having been trained on a further computer system and, after the training, each variable of the parameters from a first set of different possible variables (p_1,p_2,p_3) having been mapped to each variable in at least one predefinable second set of different possible variables (w_1,w_2,w_3),
the second set of different possible variables (w_1,w_2,w_3) comprising fewer variables than the first set of different possible variables (p_1,p_2,p_3), and
the computer system (30) being configured to read each of the parameters from the respective memory block by means of at least one mask, the mask consisting of a predefinable bit sequence, this bit sequence comprising the same number of bits as the memory block, and the computer system being configured so as, during reading, to AND each bit of the memory block with at least one respective associated bit of the mask, and to use the mask to take account of only those bits of the respective memory block that are needed to represent a maximum variable (w_3) in the second set of different possible variables (w_1,w_2,w_3),
the computer system being configured to take an input variable and the stored parameters as a basis for determining an output variable of the machine learning system and to control the actuator on the basis of the determined output variable.

7. Computer system according to Claim 6, the machine learning system (12) comprising a deep neural network,
each of the variables of those parameters that are associated with a layer, in particular neuron, of the deep neural network having been mapped to one of the variables in the respective associated set of different possible variables (w_1,w_2,w_3) of this layer, in particular neuron,
the computer system moreover being configured to read each of the parameters using different masks for the respective layers, in particular neurons.

8. Computer system according to Claim 6 or 7, a maximum variable (p_3) in the first set of different possible variables (p_1,p_2,p_3) being greater than the maximum variable (w_3) in the second set of different possible variables (w_1,w_2,w_3),
each of a predefinable number of memory blocks being divided into a plurality of sections and each section storing one of the parameters,
the mask taking account of only those bits of the respective section that are needed to represent the second maximum variable (w_3), or the mask taking account of only those bits of the respective memory block that are needed in each section to represent the second maximum variable (w_3).

9. Computer program comprising instructions that, when executed on a computer, cause said computer to carry out the method according to one of Claims 1 to 5.

10. Machine-readable storage element (15) storing the computer program according to Claim 9.

## Revendications

1. Procédé (40) destiné à commander un actionneur (10) d'un robot semi-autonome, comprenant les étapes :
- reproduction de paramètres d'un système d'apprentissage automatique entraîné (12), qui comportent chacun une taille issue d'une première quantité de différentes tailles possibles (p_1, p_2, p_3), respectivement à une taille d'au moins une deuxième quantité pouvant être prédéfinie de différentes tailles possibles (w_1, w_2, w_3),
la deuxième quantité de différentes tailles possibles (w_1, w_2, w_3) étant inférieure à la première quantité de différentes tailles possibles (p_1, p_2, p_3) ;
- enregistrement des paramètres représentés respectivement dans un bloc de mémoire, un bloc de mémoire étant un registre ;
- détermination d'une taille de sortie du système d'apprentissage automatique en fonction d'une taille d'entrée et des paramètres enregistrés,
les paramètres enregistrés étant lus chacun dans le bloc de mémoire respectif au moyen d'au moins un masque, le masque étant constitué d'une séquence de bits pouvant être prédéfinie, ladite séquence de bits comportant le même nombre de bits que le bloc de mémoire et, lors de la lecture, chaque bit du bloc de mémoire étant logiquement lié par ET à au moins un bit associé respectif du masque, et le masque permettant de ne tenir compte que des bits de chaque bloc de mémoire qui sont nécessaires pour représenter une taille maximale (w_3) de la deuxième quantité de différentes tailles possibles (w_1, w_2, w_3) ; et
- pilotage de l'actionneur (10) en fonction de la taille de sortie déterminée.

2. Procédé selon la revendication 1, une taille maximale (p_3) de la première quantité de différentes tailles possibles (p_1, p_2, p_3) étant supérieure à la taille maximale (w_3) de la deuxième quantité de différentes tailles possibles (w_1, w_2, w_3).

3. Procédé selon l'une des revendications précédentes, le système d'apprentissage automatique comprenant un réseau neuronal profond, les tailles des paramètres, qui précisément sont associés à une couche, en particulier un neurone, du réseau neuronal profond, étant reproduites chacune à l'une des tailles de la quantité associée respective de différentes tailles possibles (w_1, w_2, w_3) de ladite couche, en particulier du neurone, différents masques étant respectivement utilisés pour les couches respectives, en particulier les neurones, pour lire les paramètres.

4. Procédé selon l'une des revendications précédentes, un nombre pouvant être prédéfini des blocs de mémoire étant divisé respectivement en une multitude de sections et l'un des paramètres étant enregistré dans chaque section, le masque ne prenant en compte que les bits de la section respective qui précisément sont nécessaires pour représenter la deuxième taille maximale (w_3) ou le masque ne prenant en compte que les bits de chaque bloc de mémoire qui précisément sont nécessaires dans chaque section pour représenter la deuxième taille maximale (w_3).

5. Procédé selon l'une des revendications précédentes, la taille de sortie du système d'apprentissage automatique (12) étant marquée comme incorrecte lorsque, lors de la détermination de la taille de sortie du système d'apprentissage automatique (12), une taille du système d'apprentissage automatique (12) est supérieure à une taille maximale.

6. Système informatique (30) mis au point pour commander un actionneur d'un robot semi-autonome, comprenant au moins un processeur (31) qui est relié à un module de mémoire (32), un programme informatique étant enregistré sur le module de mémoire (32) et au moins des paramètres d'un système d'apprentissage automatique (12) étant enregistrés dans des blocs de mémoire du module de mémoire (32), les blocs de mémoire étant des registres,
le système d'apprentissage automatique (12) ayant été entraîné sur un autre système informatique et, après l'apprentissage, respectivement une taille des paramètres d'une première quantité de différentes tailles possibles (p_1, p_2, p_3) ayant été reproduite chacune à une taille d'au moins une deuxième quantité pouvant être prédéfinie de différentes tailles possibles (w_1, w_2, w_3),
la deuxième quantité de différentes tailles possibles (w_1, w_2, w_3) comportant une taille inférieure à la première quantité de différentes tailles possibles (p_1, p_2, p_3), et
le système informatique (30) étant mis au point pour lire les paramètres dans le bloc de mémoire respectif respectivement au moyen d'au moins un masque, le masque étant constitué d'une séquence de bits pouvant être prédéfinie, ladite séquence de bits comportant le même nombre de bits que le bloc de mémoire et le système informatique étant mis au point pour lier, lors de la lecture, logiquement par ET chaque bit du bloc de mémoire à au moins un bit associé respectif du masque, et le masque permettant de ne tenir compte que des bits du bloc de mémoire respectif qui précisément sont nécessaires pour représenter une taille maximale (w_3) de la deuxième quantité de différentes tailles possibles (w_1, w_2, w_3),
le système informatique étant mis au point pour déterminer une taille de sortie du système d'apprentissage automatique en fonction d'une taille d'entrée et des paramètres enregistrés et pour piloter l'actionneur en fonction de la taille de sortie déterminée.

7. Système informatique selon la revendication 6, le système d'apprentissage automatique (12) comprenant un réseau neuronal profond,
les tailles des paramètres qui précisément sont associés à une couche, en particulier un neurone, du réseau neuronal profond, ayant été reproduites chacune à l'une des tailles de la quantité associée respective de différentes tailles possibles (w_1, w_2, w_3) de ladite couche, en particulier du neurone, le système informatique étant mis au point par ailleurs pour utiliser différents masques pour les couches respectives, en particulier les neurones, pour lire les paramètres.

8. Système informatique selon la revendication 6 ou 7, une taille maximale (p_3) de la première quantité de différentes tailles possibles (p_1, p_2, p_3) étant supérieure à la taille maximale (w_3) de la deuxième quantité de différentes tailles possibles (w_1, w_2, w_3),
un nombre pouvant être prédéfini des blocs de mémoire étant divisé respectivement en une multitude de sections et un des paramètres étant respectivement enregistré dans chaque section,
le masque ne prenant en compte que les bits de la section respective, qui précisément sont nécessaires pour représenter la deuxième taille maximale (w_3) ou le masque ne prenant en compte que les bits de chaque bloc de mémoire qui précisément sont nécessaires dans chaque section pour représenter la deuxième taille maximale (w_3).

9. Programme informatique, lequel comprend des instructions qui, lorsqu'elles sont exécutées sur un ordinateur, amènent celui-ci à exécuter le procédé selon l'une des revendications 1 à 5.

10. Élément de mémoire (15) lisible par machine, sur lequel est mémorisé le programme informatique selon la revendication 9.
